# EUROPEAN PATENT SPECIFICATION

(11) **EP 3 743 268 B1**
(45) Date of publication and mention of the grant of the patent: **24.05.2023**
(21) Application number: 19700726.3
(22) Date of filing: 21.01.2019
(51) Int. Cl.: B29C 70/30, B29C 33/30, B29D 99/00, B29L 31/08

(54) **METHOD AND MOULD FOR MANUFACTURING PREFORMS FOR A WIND TURBINE ROTOR BLADE**
VERFAHREN UND FORM ZUR HERSTELLUNG VON VORFORMLINGEN FÜR EIN WINDTURBINENROTORBLATT
SYSTÈME ET MOULE DE FABRICATION DE PRÉFORMES POUR UNE PALE DE ROTOR DE TURBINE ÉOLIENNE

(30) Priority: 24.01.2018 EP 18153276
(43) Date of publication of application: 02.12.2020
(73) Proprietor: LM Wind Power A/S, 6000 Kolding (DK)
(72) Inventor: LEHMANN MADSEN,, Kristian, 7000 Fredericia (DK)
(74) Representative: COPA Copenhagen Patents
(86) International application number: PCT/EP2019/051315
(87) International publication number: WO 2019/145240

(56) References cited:
- WO-A1-2013/102463
- FR-A1- 2 598 648
- US-A1- 2003 056 887
- US-A1- 2009 084 932
- US-A1- 2017 239 849

## Description

### Field of the Invention

The present invention relates to a method of manufacturing a preform for a wind turbine blade, to a preform mould for manufacturing a preform for a wind turbine blade and to a method of manufacturing a wind turbine blade part.

### Background of the invention

The rotor blades of modern wind turbines capture kinetic wind energy by using sophisticated blade design created to maximise efficiency. There is an increasing demand for large wind blades which may exceed 80 metres in length and 4 metres in width. The blades are typically made from a fibre-reinforced polymer material and comprise a pressure side shell half and a suction side shell half, also called blade halves. The cross-sectional profile of a typical blade includes an airfoil for creating an air flow leading to a pressure difference between both sides. The resulting lift force generates torque for producing electricity.

The shell halves of wind turbine blades are usually manufactured using blade moulds. First, a blade gel coat or primer is applied to the mould. Subsequently, fibre reinforcement and/or fabrics are placed into the mould followed by resin infusion. A vacuum is typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are assembled by being glued or bolted together substantially along a chord plane of the blade.

In the above-described manufacturing process, preforms may be used. A preform is a shaped arrangement of fibres, such as multiple layers thereof, which has been bound and/or consolidated for later use as part of the fibre lay-up in the blade mould. The rationale for using preforms for blade manufacturing is to reduce cycle time in the blade mould. Also, using preforms may reduce the number of required repairs due to the preconsolidated structure of the preforms.

Typically, multiple preforms will be used in manufacturing a wind turbine blade. This usually requires large space for manufacturing and for storing the preforms. In addition, the manufacturing of preforms of different shapes and sizes can be time-consuming and expensive. In particular, the manufacturing of moulds for preforms can be tedious and costly, which applies all the more if preforms of various shapes and curvatures are required.

FR 2598648 A1 deals with a mould for the manufacture of composite components, characterised in that it consists a shape produced from a synthetic foam and in that its useful walls are covered with a different material other than foam. US 2009/0084932 A1 discloses a mold for a wind turbine blade including a plurality of spaced-apart joists, each joist having an edge configuration generally corresponding to a form of the blade; and a flexible frame, supported by the edges of the joists, for shaping an exterior surface of the blade. US 2003/0056887 A1 discloses an apparatus for forming curved laminations including a first die board, which has a planar lower surface, a first curved upper surface and a first predetermined thickness. US 2017 /0239849 A1 relates to a master model defining a useful surface having a complex shape, including a set of juxtaposed frames, each frame including a panel having a useful edge, the frames being disposed parallel and held rigidly connected with predefined spacings such that the useful edges of same form the useful surface. WO 2013/102463 A1 discloses a master model structure for moulding of large objects such as hulls, wind turbine blades and nacelles.

It is a first object of the present invention to provide a cost-efficient way of manufacturing preforms for wind turbine blade parts.

It is a further object of the present invention to provide a flexible and time-efficient mode of manufacturing such preforms.

It is another object of the present invention to provide an improved method of manufacturing a mould for producing such preforms.

### Summary of the invention

The invention is set out in the appended set of claims.

The present inventors have found that one or more of said objects may be achieved by a method of manufacturing a preform for a wind turbine blade according to claim 1.

The present inventors have found that this method allows for a particularly flexible and cost-efficient manufacturing process of wind turbine blade preforms. By providing a plurality of support elements in combination with a plurality of strips, various shapes and sizes of preform moulds can be produced in a cost-effective and flexible way. Preferably, the preform to be manufactured by the present method is a consolidated arrangement of material comprising fibres, such as glass fibres, and a binding agent. The preform will typically be used for manufacturing a blade half of a wind turbine blade. The preforms can be used in a subsequent blade moulding process as part of the fibre lay-up in the blade mould, such as a blade half mould. The preforms manufactured according to the present invention could be placed within the root region of a blade mould, thus constituting part of the root laminate. The root region may correspond to a region of the blade having a substantially circular or elliptical cross-section. However, the preforms could also be used for other parts and regions of a wind turbine blade, such as trailing edge or leading edge reinforcements or adhesive flanges. Alternatively, the preforms could be used for a full blade layup.

Each support element comprises a planar member which preferably extends vertically from the ground surface so that its front surface extends in a plane substantially perpendicular to the floor or workspace surface. It is preferred that the support elements are extending substantially vertically. The planar member of the support element is substantially planar so that it extends in a vertical plane. It may advantageously have the shape of a plate, preferably a rectangular plate comprising a cutaway along at least part of its upper edge. The cutaway may be generally arcuate, U-shaped or semi-circular. Thus, the top surface of the support element preferably comprises a curved, arcuate, undulated or generally U-shaped segment.

The front surface and the opposing back surface of the planar member will usually be in substantially parallel planes and will typically constitute the surfaces of the planar member with the largest surface area. By contrast, the top surface and the opposing bottom surface will usually be comparatively narrow, thus having less surface area, in particular when the planar member is made from a thin sheet, for example a steel sheet with a thickness of between 1 and 50 mm. The two opposing lateral surfaces, or side surfaces, of the planar member will usually be just as narrow/wide as the top and bottom surfaces.

In some embodiments, the support element can comprise a foot support, for example a foot flange, to facilitate stable arrangement on the ground surface. The support element may also be fixed to the ground surface. For instance, the bottom surface of the planar member may be received in a groove or a recess provided in the ground surface or in a ground plate.

It is preferred that the step of providing a plurality of support elements comprises providing at least three, such as at least four or at least five, support elements. In one embodiment, the support elements are interconnected by one, two or more lateral rails, which are preferably fixed to the lateral surfaces of the planar members of each support element.

The strips which are arranged on the top surface of the support elements will usually be steel strips or composite strips. The strips may take the form of planks, such as steel planks or composite planks. The strips form a moulding surface, or part thereof, for forming a preform. The strips are arranged in juxtaposition, i.e. in a side-by-side fashion. The strips may be laid edge-to-edge or a predefined gap may be provided in between adjacent strips. It has been found by the present inventors that using multiple adjacent strips to form a moulding surface for a preform allows for an easy and cost-efficient manufacturing of preform moulds even with complex geometries.

The strips may have a rectangular or prismatic geometry. In other embodiments, they could be wedge-shaped, for example for adapting to changes in the geometry/chord width. In other embodiments, they could be cut at the edge for adapting to geometry changes.

It is preferred that the step of arranging a plurality of strips comprises arranging at least three, such as at least four, at least five, at least six, at least seven, or at least eight, strips on the top surface of the planar member of each support element. In a preferred embodiment, the step of arranging a plurality of strips comprises arranging not more than 15 strips on the top surface of the planar member of each support element. In another embodiment, the step of arranging a plurality of strips comprises arranging not more than 10 strips on the top surface of the planar member of each support element. Advantageously, 3-15 strips are arranged on the top surface of the planar member of each support element.

In other embodiments, up to 60, 70, 80, 90 or 100 strips could be arranged on the top surface of the planar member of each support element. In one embodiment, the strips are arranged substantially in parallel to each other. In another embodiment, the strips are arranged substantially perpendicularly to the plane of orientation of the planar members of the support elements.

The strips extend in a longitudinal direction of the preform mould, such that their longitudinal direction is aligned with the longitudinal direction of the preform mould. Advantageously, each of the plurality of strips will be connected to each of the support elements.

The fibre laying step will typically comprise the use of one or more fibre lay-up devices. In a preferred embodiment, the method further comprises a step of heating the fibre material and the binding agent to form a preform. Preferably, the fibre material and the binding agent are heated using one or more heating devices, such as an oven. Preferably, a binding agent is added to the fibres prior to the heating step. Such binding agent is preferably present in an amount of 0.1-15 wt% relative to the weight of the fibre material. The binding agent may also be present in an amount of 10-20 gram per square meter of glass surface.

Typically, the fibre material is placed successively onto the moulding surface provided by the strips. The fibre material may comprise glass fibres, carbon fibres or a combination thereof. According to a preferred embodiment of the method, a glass fibre material is placed onto the strips, such as multiple layers of glass fibre material. The fibre material may advantageously be brought into contact with a binding agent before or during the fibre lay-up.

In another embodiment, the fibre material may include fibre rovings, such as glass fibre rovings. The lay-up process may include placing multiple single roving bundles into the mould, the roving bundles being preferably aligned unidirectionally. In a preferred embodiment, multiple layers of fibre rovings or roving bundles are successively placed into each preform mould.

The binding agent can be added simultaneously with the fibres or subsequently to fibre lay-up. The binding agent is preferably present in an amount of 0.1-15 wt% relative to the weight of the fibre material. The binding agent may also be present in an amount of 5-40, preferably 10-20, gram per square meter of glass surface. In preferred embodiments, the binding agent is present in an amount of 0.5-5 wt%, preferably 0.5-2.5 wt%, relative to the weight of the fibre material. Advantageously, the binding agent is a thermoplastic binding agent. The binding agent may comprise a polyester, preferably a bisphenolic polyester.

In a preferred embodiment, the heating of the fibre material and the binding agent takes place at a temperature of between 40 and 160 °C, preferably between 90 and 160 °C.

An example of a suitable binding agent is a polyester marketed under the name NEOXIL 940. Examples include NEOXIL 940 PMX, NEOXIL 940 KS 1 and NEOXIL 940 HF 2B, all manufactured by DSM Composite Resins AG. Another example is a polyester resin marketed under the name C.O.I.M. FILCO^{®} 661 FPG 005, which is a bisphenolic unsaturated polyester resin in powder form. Preferably, the binding agent is a polyester, preferably a bisphenolic polyester. In other embodiments, the binding agent is a hotmelt adhesive or based on a prepreg resin.

According to another embodiment, the binding agent is a thermoplastic binding agent. Typically, the fibre rovings are at least partially joined together by means of the binding agent by thermal bonding. In a preferred embodiment, the binding agent is a binding powder, such as a thermoplastic binding powder.

In one embodiment, the preforms of the present invention essentially consist of the fibre material and the binding agent. This means that the preforms contain no more than 10 wt%, preferably not more than 5 wt% or not more than 1 wt%, of material other than fibre material and binding agent relative to the total weight of the preform. According to another embodiment, the preform consists of the fibre material and the binding agent.

In another embodiment, the fibre material used for the preforms of the present invention essentially consists of glass fibres. This means that the fibre material contains not more than 10 wt%, preferably not more than 5 wt% or not more than 1 wt%, of material other than glass fibres relative to the total weight of the fibre material. According to another embodiment, the fibre material consists of glass fibres.

In one embodiment, the binding agent is present in an amount of 1-6 wt% relative to the weight of the fibre material. According to another embodiment, the melting point of the binding agent is between 40° and 220 °C, preferably between 40 and 160 °C. According to another embodiment, the binding agent comprises a polyester, preferably a bisphenolic polyester.

In one embodiment of the present invention, each preform essentially consists of the fibre material and the binding agent. According to another embodiment, the fibre material comprises fibre rovings, preferably glass fibre rovings. In other embodiments, the fibre material may comprise carbon fibres or a hybrid material. According to another embodiment, the fibre material comprises a fibre fabric, such as a fibre mat. In another embodiment, a preform may further comprise at least one fibre fabric such as a fibre mat. Fibre rovings may be arranged on top and/or below such fabric.

In a preferred embodiment, the preforms manufactured according to the afore-mentioned method are used as part of the root region of a wind turbine blade, such as the root laminate. The root region may extend up to 40 meters, such as up to 25 meters, from the root end of the blade, as seen in its longitudinal direction. In other embodiments, the root region may extend to the shoulder of the blade +/- 5 meters. However, the preforms could also be used for other parts and regions of a wind turbine blade. In other embodiments, the preforms manufactured according to the afore-mentioned method are used over a length of 10-35% of the total blade length. In another embodiment, the preforms manufactured according to the afore-mentioned method are used in a region of the blade extending between its root end and a shoulder of the blade.

In a preferred embodiment, the support element comprises one or more tabs extending substantially perpendicularly from the top surface of the planar member for supporting the strips. The tabs effectively increase the surface area of the top surface, wherein the tabs can be viewed as being part of said top surface. The tabs could be formed in the plane of planar member by cutting a plate, for example a steel plate, in the shape of the planar member and the tab. The tabs may subsequently be folded into the position substantially perpendicular to the plane of orientation of the planar member, for example assisted by scoring or notching operations along a fold line. In some embodiments, the support element comprises at least two, such as at least three, four or five tabs extending substantially perpendicularly from the top surface of the planar member for supporting the strips.

According to another embodiment, the top surface of the planar member of the support element is curved. In another embodiment, the top surface of the support element is curved, arcuate, undulated or generally U-shaped, when seen from a front view of the support element. In one embodiment, the two corners of the upper edge of the planar member are connected by an at least partly curved, arcuate, undulated or generally U-shaped path.

In a preferred embodiment, the curvature of the top surface of the planar member of the support element corresponds to a cross sectional profile of a wind turbine blade half or a part thereof. According to another embodiment, the curvature of the top surface of the planar member of one support element is different from the curvature of the top surface of the planar member of another support element. This has the advantage that the shape of the cross-sectional profile of the preform may vary in its length direction. Thus, even complex preform mould geometries can be easily obtained using the method and preform mould of the present invention.

The support elements may generally be manufactured starting from a rectangular sheet and by cutting a curved path away along at least part of its upper edge. In some embodiments, the cutting path may provide for one or more foldable tabs extending from the upper edge.

In a preferred embodiment, the plurality of support elements are arranged substantially in parallel to each other. In particular the respective front surfaces of the planar members may be arranged substantially parallel to each other.

According to another embodiment, the strips are arranged in juxtaposition with a predefined gap between adjacent strips. In a preferred embodiment, said gap between adjacent strips is between 1 and 25 mm wide. This allows for a certain flexibility and variability when arranging the strips. In some embodiments, adjacent strips are interconnected, preferably hingedly interconnected, along their longitudinal edges. In a preferred embodiment, the strips are hingedly interconnected by one or more elastic member provided in between adjacent strips. The elastic members may comprise rubber or other elastic material. In other embodiments, the strips are arranged in juxtaposition such that each strip overlaps with an adjacent strip.

According to another embodiment, each strip has a width W of between 0.04 and 5 m, preferably between 0.1 and 1 meter. In a preferred embodiment, each strip has a length L of between 15 and 50 m.

According to another embodiment, the strips are attached to the support elements by one or more blind fasteners or spot weldings. In a preferred embodiment, the planar member of the support element has a thickness of less than 3 cm, such as less than 2 cm or less than 1 cm.

In a preferred embodiment, the method further comprises the step of heating the fibre material and the binding agent to a temperature of between 40 and 200 °C to form a plurality of preforms.

In another aspect, the present invention relates to a preform mould for manufacturing a preform for a wind turbine blade according to claim 14.

The plurality of strips advantageously forms a moulding surface, or a part thereof, for forming a preform for a wind turbine blade half. It is preferred that said moulding surface is substantially flat. In a preferred embodiment, the difference in height of the moulding surface between its lowest point and its highest point is less than 3 meters, 2 meters, more preferably less than 1 meters, most preferably less than 0.5 meters. In other embodiments, the difference in height of the moulding surface between its lowest point and its highest point is less than 50% of the root diameter, more preferably less than 25% of the root diameter, most preferably less than 10% of the root diameter of the wind turbine blade to be manufactured.

When manufacturing large blade halves, the fibre layup in the blade mould at the root end may be challenging. Fibre material may slide down the almost vertical blade mould walls due to the almost semi-circular cross section or circumference at the root end. The sliding of fibre material during manufacturing may lead to the formation of undesired wrinkles in the shell structure, which may present zones of structural weakness within the blade. Thus, the relatively flat moulding surface of the preform moulds of the present invention provides for the option of forming relatively flat preforms that together cover the entire circumference of the blade half, as seen in its cross section, for an improved and safer layup process at the blade mould.

In one embodiment, the preform mould has a length L of between 15 and 30 meters. In a preferred embodiment of the preform mould of the present invention, at least one of the support elements comprises one or more tabs extending substantially perpendicularly from the top surface of the planar member for supporting the strips. According to another embodiment, the top surface of the planar member of the support element is curved. In another embodiment, the top surface of the support element is curved, arcuate, undulated or generally U-shaped, when seen from a front view of the support element. In one embodiment, the two corners of the upper edge of the planar member are connected by an at least partly curved, arcuate, undulated or generally U-shaped path. In a preferred embodiment, the curvature of the top surface of the planar member of the support element corresponds to a cross sectional profile of a wind turbine blade half or a part thereof. According to another embodiment, the curvature of the top surface of the planar member of one support element is different from the curvature of the top surface of the planar member of another support element.

The preform mould of the present invention may comprise at least three, preferably at least five, strips. In some embodiments, the preform mould comprises not more than 15 strips. In another embodiment, the preform mould comprises not more than 10 strips. Advantageously, the preform mould of the present invention comprises between 3-15 strips.

The strips of the preform mould are preferably flexible strips. In preferred embodiments, the strips are relatively thin with a maximum thickness of between 1 and 10 mm. It is preferred that the strips are bendable strips. Thus, the strips can advantageously be fitted to produce preform geometries varying in curvature in the longitudinal direction of the preform.

In some embodiments, each preform mould has a length-width ratio of at least 5:1. In other embodiments, each preform mould has a length-width ratio of at least 5:1, such as at least 10:1. In a preferred embodiment, each preform mould has a length-width ratio of at least 15:1.

In a preferred embodiment, each of the preforms obtainable by the preform mould of the present invention is configured to form a blade section starting from the root end of the wind turbine blade. Thus, preferably each of the preforms obtainable by the preform mould of the present invention is configured to be arranged at the root end of the blade mould. Most preferably, the preform obtainable by the preform mould of the present invention is configured to form a subsection of the root section extending from the root end of the blade together with other subsections of the root section equally extending from the root end of the blade.

In some embodiments, the preform moulds of the present invention comprise a moulding surface configured for the manufacturing of respective subsections of a wind turbine blade, each subsection extending from the root end of the wind turbine blade.

The preform mould has a concave, or inwardly curved, moulding surface.

In another aspect, the present invention relates to a method of manufacturing a wind turbine blade part according to claim 15.

In some embodiments, the method of manufacturing a wind turbine blade part may involve arranging preforms in a prefab mould with subsequent infusing of resin and curing for manufacturing sub parts for later blade assembly.

In some embodiments, the wind turbine blade part is a root laminate, a main laminate or a part thereof. In another embodiment, the blade part is a blade half.

Typically, the resin infusion step comprises vacuum assisted resin transfer moulding. In a preferred embodiment, the resin dissolves the binding agent of the preform. Other embodiments involve chemical binding, for example for epoxy or thermoset resins. The resin for injecting the preform during the manufacturing of wind turbine blade parts, such as a root laminate, may be an epoxy, a polyester, a vinyl ester or another suitable thermoplastic or duroplastic material. In other embodiments, the resin may be a thermosetting resin, such as epoxy, vinyl ester or polyester, or a thermoplastic resin, such as nylon, PVC, ABS, polypropylene or polyethylene.

It will be understood that any of the above-described features may be combined in any embodiment of the method of manufacturing a preform or of the preform mould. In particular, features and embodiments described with regard to the preform mould may also apply to the method of manufacturing a preform, and vice versa.

As used herein, the term "planar member" indicates member with an extension primarily in two dimensions, i.e. a member with major extensions in the width and length dimension and a significantly smaller extension in the depth extension. Examples include planar members with width and length extensions at least 10 times higher than the depth extension.

As used herein, the term "wt%" means weight percent. The term "relative to the weight of the fibre material" means a percentage that is calculated by dividing the weight of an agent, such as a binding agent, by the weight of the fibre material. As an example, a value of 1 wt% relative to the weight of the fibre material corresponds to 10 g of binding agent per kilogram of fibre material.

As used herein, the term "longitudinal" means an axis or direction running substantially parallel to the maximum linear dimension of the element in question, for example a strip or a preform mould.

### Detailed description of the Invention

The invention is explained in detail below with reference to embodiments shown in the drawings, in which
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a perspective drawing of an arrangement of support elements for a preform mould according to the present invention,
Fig. 6 is a perspective drawing of a preform mould according to the present invention,
Fig. 7 is a perspective drawing of another embodiment of a preform mould according to the present invention,
Fig. 8 is a perspective drawing illustrating an arrangement of support elements for a preform mould according to another embodiment of the present invention,
Fig. 9 is a perspective drawing of a support element according to an embodiment of the present invention, and
Fig. 10 is a perspective drawing of a blade mould for lay up of preforms according to the present invention.

### Detailed Description

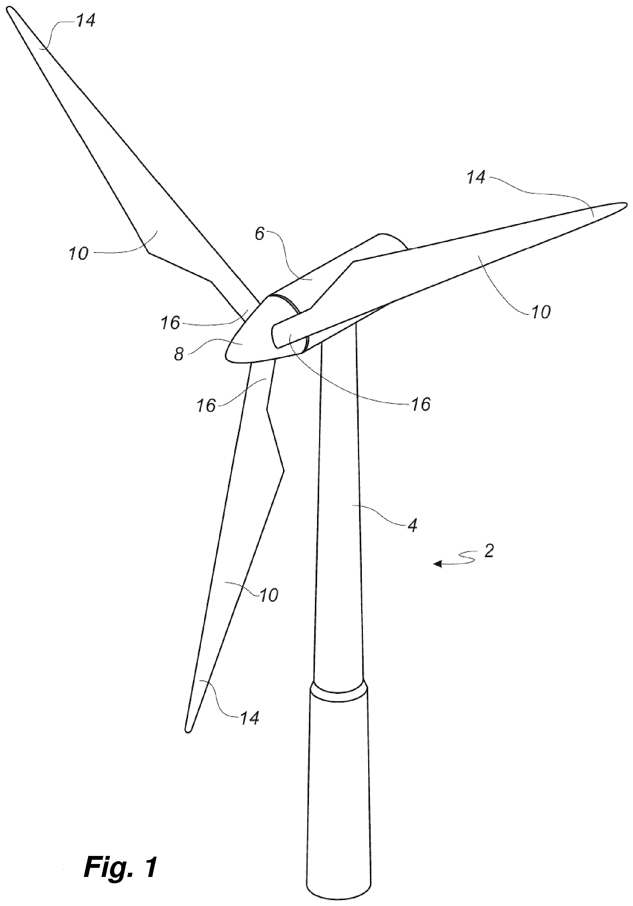

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

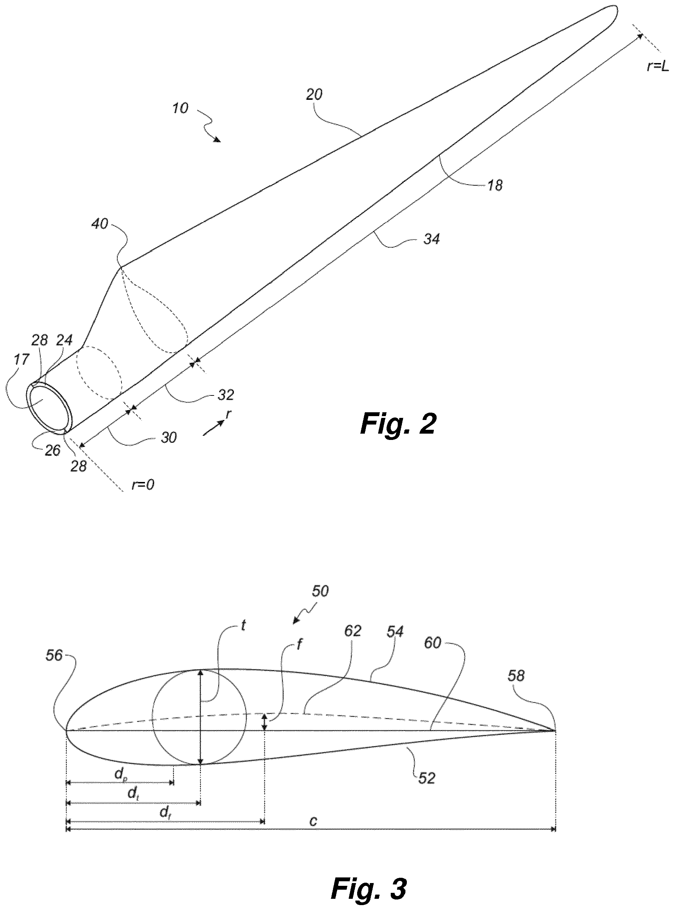

Fig. 2 shows a schematic view of a first embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance rfrom the hub. The airfoil region 34 has an airfoil profile with a chord extending between the leading edge 18 and the trailing edge 20 of the blade 10. The width of the chord decreases with increasing distance rfrom the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

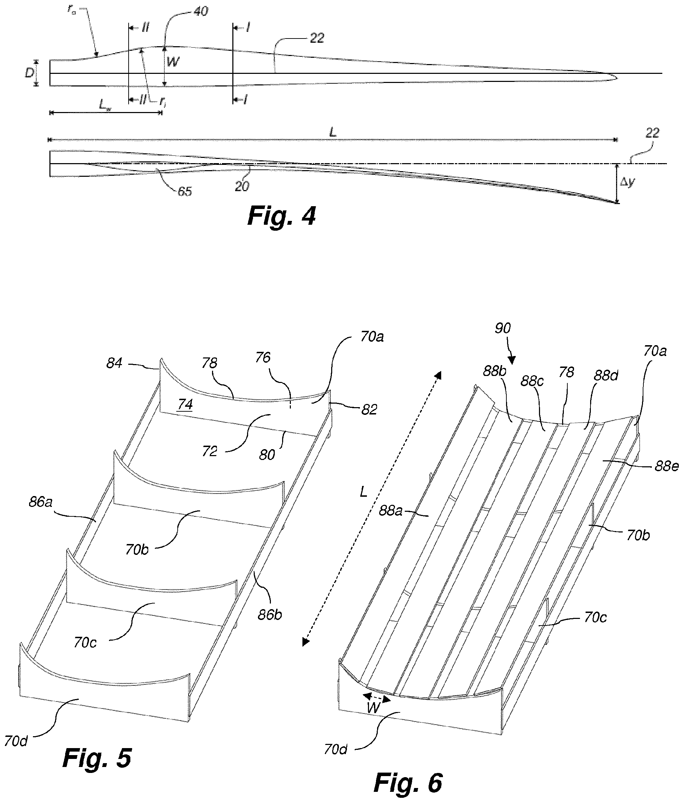

Figs. 3 and 4 depict parameters which are used to explain the geometry of the wind turbine blade according to the invention. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use-i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber f, the position *d_{f}* of the maximum camber f, the maximum airfoil thickness t, which is the largest diameter of the inscribed circles along the median camber line 62, the position *dₜ* of the maximum thickness *t,* and a nose radius (not shown). These parameters are typically defined as ratios to the chord length c. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position *r* = 0, and the tip end located at *r* = *L.* The shoulder 40 of the blade is located at a position *r = L_{w},* and has a shoulder width *W,* which equals the chord length at the shoulder 40. The diameter of the root is defined as *D*. The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

Fig. 5 is a perspective view of an arrangement of support elements for a preform mould for manufacturing a wind turbine blade according to the present invention. The arrangement of Fig. 5 comprises four support elements 70a-d, each support element comprising a planar member 72 having a front surface 74 and an opposing back surface 76, a curved top surface 78 and an opposing bottom surface 80, and two opposing lateral surfaces 82, 84 (shown for support element 70a). The top surface 78 of each support element is curved, corresponding to a cross sectional profile of a wind turbine blade half or a part thereof. In the embodiment shown in Fig. 5, the support elements 70a-d are arranged substantially parallel to each other and are interconnected by two lateral rails 86a, 86b.

As seen in Fig. 6, a preform mould 90 according to the present invention are obtained by arranging a plurality of strips 88a-e, in juxtaposition, on the top surface 78 of the support elements 70a-d. A fibre material and a binding agent can be laid on at least part of the strips to form the preform, usually after a heating step. Fig. 6 also indicates the length L and width W of the strips 88.

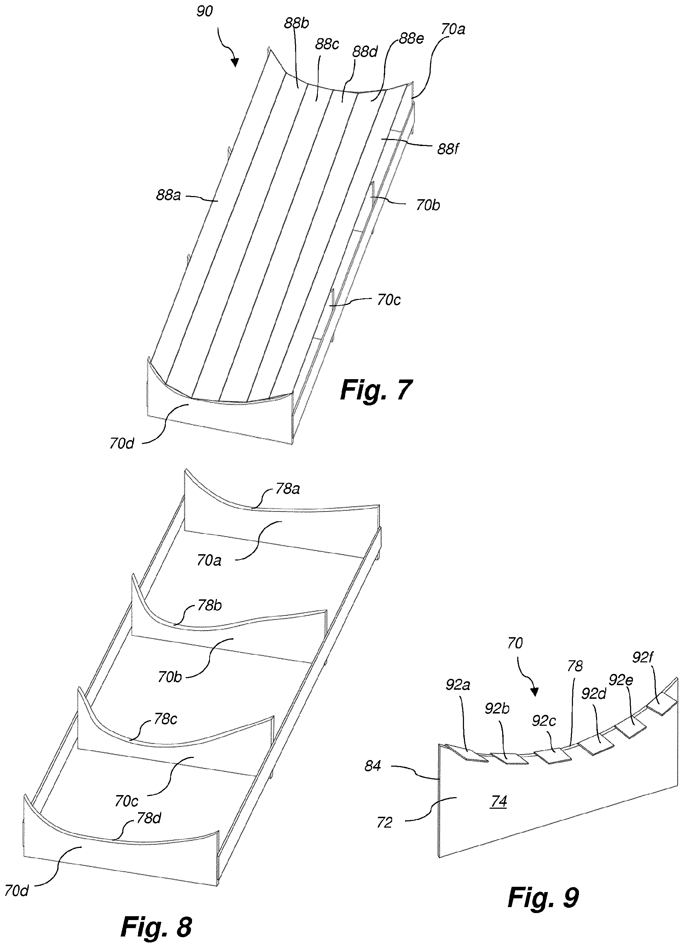

In the embodiment of Fig. 6, the strips 88a-e are arranged in juxtaposition with a predefined gap between adjacent strips. The distance between adjacent strips may be between 1 and 25 mm. By contrast, Fig. 7 illustrates an embodiment in which the strips 88a-f are placed edge-to-edge with substantially no gap between adjacent strips.

Fig. 8 illustrates another arrangement of support elements for a preform mould according to the present invention. Here, the support elements 70a-d differ in terms of the curvature of their respective top surfaces 78a-d. This allows for manufacturing of preforms with complex geometries. According to the method of the present invention, preform moulds of different shapes and curvatures can be easily manufactured and adapted to specific requirement.

Fig. 9 is a perspective drawing of one embodiment of a support element 70 according to the present invention. The support element 70 comprises a planar member 72 and several tabs 92a-f extending substantially perpendicularly from its top surface 78 for supporting the strips. The tabs 92a-f effectively increase the surface area of the top surface 78 to provide further support and stability to the preform mould.

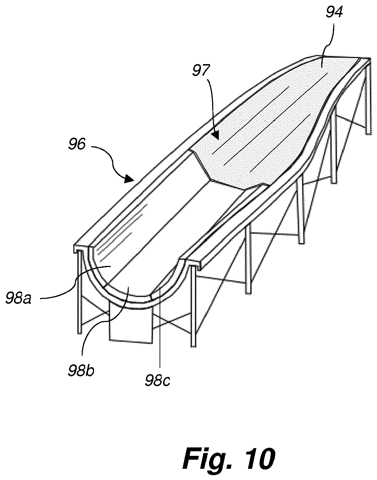

As illustrated in Fig. 10, the manufactured preforms 98a, 98b, 98c can be laid up in a blade mould 96 to form part of a wind turbine blade, such as the root laminate. It is particularly preferred that the preforms manufactured according to the present invention are used for a blade section starting from the root end of the blade, such as the root region. The preforms 98a, 98b, 98c are arranged in the blade mould cavity 97, usually together with additional fibre material 94. Then, resin is infused to the blade mould cavity 97, which is subsequently cured or hardened in order to form the blade part, such as a blade half.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: camber line / median line
- 70: support element
- 72: planar member
- 74: front surface
- 76: back surface
- 78: top surface
- 80: bottom surface
- 82: lateral surface
- 84: lateral surface
- 86: rail
- 88: strip
- 90: preform mould
- 92: tab
- 94: fibre material
- 96: blade mould
- 97: blade mould cavity
- 98: preform
- *c*: chord length
- *dₜ*: position of maximum thickness
- *d_{f}*: position of maximum camber
- *dₚ*: position of maximum pressure side camber
- *f*: camber
- *L*: blade length
- *r*: local radius, radial distance from blade root
- *t*: thickness
- *Δy*: prebend

## Claims

1. A method of manufacturing a preform for a wind turbine blade, said method comprising the steps of
- providing a plurality of support elements (70), each support element (70) comprising a planar member (72) having a front surface (74) and an opposing back surface (76), a top surface (78) and an opposing bottom surface (80), and two opposing lateral surfaces (82, 84),
- arranging a plurality of strips (88) on the top surface (78) of the planar member (72) of each support element (70) to provide a preform mould, wherein the strips (88) are arranged in juxtaposition, wherein the strips extend in a longitudinal direction of the preform mould, such that their longitudinal direction is aligned with the longitudinal direction of the preform mould, wherein the plurality of strips form a concave, or inwardly curved, moulding surface for forming the preform,
- laying a fibre material, and optionally a binding agent, on at least part of the strips (88) for forming the preform.

2. A method according to claim 1, wherein the support element (70) comprises one or more tabs (92) extending substantially perpendicularly from the top surface (78) of the planar member (72) for supporting the strips (88).

3. A method according to claims 1 or 2, wherein the top surface (78) of the planar member (72) is curved.

4. A method according to claim 3, wherein the curvature of the top surface (78) of the planar member (72) corresponds to a cross sectional profile of a wind turbine blade half or a part thereof.

5. A method according to claims 3 or 4, wherein the curvature of the top surface (78) of the planar member (72) of one support element (70) is different from the curvature of the top surface (78) of the planar member (72) of another support element (70).

6. A method according to any of the preceding claims, wherein the plurality of support elements (70) are arranged substantially in parallel to each other.

7. A method according to any of the preceding claims, wherein the strips (88) are arranged in juxtaposition with a predefined gap between adjacent strips (88).

8. A method according to claim 7, wherein the gap between adjacent strips (88) is between 1 and 25 mm wide.

9. A method according to any of the preceding claims, wherein each strip (88) has a width W of between 0.04 and 5 m and wherein each strip has a length L of between 15 and 50 m.

10. A method according to any of the preceding claims, wherein the strips (88) are attached to the support elements (70) by one or more blind fasteners or spot weldings.

11. A method according to any of the preceding claims, wherein the planar member (72) of the support element (70) has a thickness of less than 3 cm.

12. A method according to any of the preceding claims, wherein adjacent strips (88) are interconnected along their longitudinal edges.

13. A method according to any of the preceding claims, wherein the method further comprises the step of heating the fibre material and the binding agent to a temperature of between 40 and 200 °C to form a plurality of preforms.

14. A preform mould for manufacturing a preform for a wind turbine blade, the preform mould comprising
- a plurality of support elements (70), each support element (70) comprising a planar member (72) having a front surface (74) and an opposing back surface (76), a top surface (78) and an opposing bottom surface (80), and two opposing lateral surfaces (82, 84),
- a plurality of strips (88) arranged in juxtaposition and edge-to-edge on the top surface (78) of the planar member (72) of each support element (70), wherein the strips extend in a longitudinal direction of the preform mould, such that their longitudinal direction is aligned with the longitudinal direction of the preform mould, wherein the plurality of strips form a concave, or inwardly curved, moulding surface for forming the preform.

15. A method of manufacturing a wind turbine blade part, the method comprising:
- manufacturing one or more preforms (98) according to the method of claims 1-13,
- arranging the preforms (98) in a blade mould cavity (97), optionally together with additional material (94),
- infusing resin to the blade mould cavity (97),
- curing or hardening the resin in order to form the blade part.

## Patentansprüche

1. Verfahren zum Herstellen eines Vorformlings für einen Windkraftanlagenflügel, wobei das Verfahren die folgenden Schritte umfasst:
- Bereitstellen einer Vielzahl von Traggliedern (70), wobei die Tragglieder (70) jeweils ein ebenflächiges Element (72) mit einer vorderen Oberfläche (74) und einer entgegengesetzten hinteren Oberfläche (76), einer oberen Oberfläche (78) und einer entgegengesetzten unteren Oberfläche (80) sowie zwei entgegengesetzten seitlichen Oberflächen (82, 84) umfassen,
- Anordnen einer Vielzahl von Leisten (88) auf der oberen Oberfläche (78) des ebenflächigen Elements (72) jedes Tragglieds (70), um ein Vorformling-Formwerkzeug bereitzustellen, wobei die Leisten (88) in Nebeneinanderstellung angeordnet sind, wobei sich die Leisten in einer Längsrichtung des Vorformling-Formwerkzeugs erstrecken, sodass ihre Längsrichtung entlang der Längsrichtung des Vorformling-Formwerkzeugs orientiert ist, wobei die Vielzahl von Leisten eine konkave oder nach innen gekrümmte Formungsfläche zum Bilden des Vorformlings bilden,
- Legen eines Fasermaterials und optional eines Bindemittels auf mindestens einen Teil der Leisten (88), um den Vorformling zu bilden.

2. Verfahren nach Anspruch 1, wobei das Tragglied (70) eine oder mehrere flache Vorsprünge (92) umfasst, die sich im Wesentlichen rechtwinklig von der oberen Oberfläche (78) des ebenflächigen Elements (72) erstrecken, um die Leisten (88) zu tragen.

3. Verfahren nach Anspruch 1 oder 2, wobei die obere Oberfläche (78) des ebenflächigen Elements (72) gekrümmt ist.

4. Verfahren nach Anspruch 3, wobei die Krümmung der oberen Oberfläche (78) des ebenflächigen Elements (72) einem Querschnittsprofil einer Windkraftanlagenflügelhälfte oder eines Teils davon entspricht.

5. Verfahren nach Anspruch 3 oder 4, wobei die Krümmung der oberen Oberfläche (78) des ebenflächigen Elements (72) eines Tragglieds (70) von der Krümmung der oberen Oberfläche (78) des ebenflächigen Elements (72) eines anderen Tragglieds (70) verschieden ist.

6. Verfahren nach einem der vorangehenden Ansprüche, wobei die Vielzahl von Traggliedern (70) im Wesentlichen parallel zueinander angeordnet sind.

7. Verfahren nach einem der vorangehenden Ansprüche, wobei die Leisten (88) in Nebeneinanderstellung mit einem vorab definierten Zwischenraum zwischen benachbarten Leisten (88) angeordnet sind.

8. Verfahren nach Anspruch 7, wobei der Zwischenraum zwischen benachbarten Leisten (88) zwischen 1 und 25 mm breit ist.

9. Verfahren nach einem der vorangehenden Ansprüche, wobei die Leisten (88) jeweils eine Breite W von zwischen 0,04 und 5 m aufweisen und wobei die Leisten jeweils eine Länge L von zwischen 15 und 50 m aufweisen.

10. Verfahren nach einem der vorangehenden Ansprüche, wobei die Leisten (88) durch ein oder mehrere Blindbefestigungselemente oder Punktschweißungen an den Traggliedern (70) angebracht sind.

11. Verfahren nach einem der vorangehenden Ansprüche, wobei das ebenflächige Element (72) des Tragglieds (70) eine Dicke von weniger als 3 cm aufweist.

12. Verfahren nach einem der vorangehenden Ansprüche, wobei benachbarte Leisten (88) entlang ihrer Längskanten miteinander verbunden sind.

13. Verfahren nach einem der vorangehenden Ansprüche, wobei das Verfahren ferner den Schritt des Erwärmens des Fasermaterials und des Bindemittels auf eine Temperatur von zwischen 40 und 200 °C umfasst, um eine Vielzahl von Vorformlingen zu bilden.

14. Vorformling-Formwerkzeug zum Herstellen eines Vorformlings für einen Windkraftanlagenflügel, wobei das Vorformling-Formwerkzeug Folgendes umfasst:
- eine Vielzahl von Traggliedern (70), wobei die Tragglieder (70) jeweils ein ebenflächiges Element (72) mit einer vorderen Oberfläche (74) und einer entgegengesetzten hinteren Oberfläche (76), einer oberen Oberfläche (78) und einer entgegengesetzten unteren Oberfläche (80) sowie zwei entgegengesetzten seitlichen Oberflächen (82, 84) umfassen,
- eine Vielzahl von Leisten (88), die in Nebeneinanderstellung und Kante-an-Kante auf der oberen Oberfläche (78) des ebenflächigen Elements (72) jedes Tragglieds (70) angeordnet sind, wobei sich die Leisten in einer Längsrichtung des Vorformling-Formwerkzeugs erstrecken, sodass ihre Längsrichtung entlang der Längsrichtung des Vorformling-Formwerkzeugs orientiert ist, wobei die Vielzahl von Leisten eine konkave oder nach innen gekrümmte Formungsfläche zum Bilden des Vorformlings bilden.

15. Verfahren zum Herstellen eines Windkraftanlagenflügelteils, wobei das Verfahren Folgendes umfasst:
- Herstellen eines oder mehrerer Vorformlinge nach dem Verfahren der Ansprüche 1-13,
- Anordnen der Vorformlinge in einer Flügelformwerkzeughöhlung (97), optional zusammen mit zusätzlichem Material (94),
- Eingießen von Harz in die Flügelformwerkzeughöhlung (97),
- Abbinden oder Härten des Harzes, um den Flügelteil zu bilden.

## Revendications

1. Procédé de fabrication d'une préforme pour une pale d'éolienne, ledit procédé comportant les étapes consistant à
- mettre en oeuvre une pluralité d'éléments de support (70), chaque élément de support (70) comportant un élément plan (72) ayant une surface avant (74) et une surface arrière opposée (76), une surface supérieure (78) et une surface inférieure opposée (80), et deux surfaces latérales opposées (82, 84),
- agencer une pluralité de bandes (88) sur la surface supérieure (78) de l'élément plan (72) de chaque élément de support (70) à des fins de mise en oeuvre d'un moule à préforme, dans lequel les bandes (88) sont agencées de manière juxtaposée, dans lequel les bandes s'étendent dans une direction longitudinale du moule à préforme, de telle sorte que leur direction longitudinale est alignée sur la direction longitudinale du moule à préforme, dans lequel les bandes de la pluralité de bandes forment une surface de moulage concave, ou courbée vers l'intérieur, pour former la préforme,
- poser un matériau fibreux, et éventuellement un agent liant, sur au moins une partie des bandes (88) pour former la préforme.

2. Procédé selon la revendication 1, dans lequel l'élément de support (70) comporte une ou plusieurs languettes (92) s'étendant de manière sensiblement perpendiculaire par rapport à la surface supérieure (78) de l'élément plan (72) à des fins de support des bandes (88).

3. Procédé selon les revendications 1 ou 2, dans lequel la surface supérieure (78) de l'élément plan (72) est courbe.

4. Procédé selon la revendication 3, dans lequel la courbure de la surface supérieure (78) de l'élément plan (72) correspond à un profil de section transversale d'une moitié de pale d'éolienne ou d'une partie de celle-ci.

5. Procédé selon les revendications 3 ou 4, dans lequel la courbure de la surface supérieure (78) de l'élément plan (72) d'un élément de support (70) est différente de la courbure de la surface supérieure (78) de l'élément plan (72) d'un autre élément de support (70).

6. Procédé selon l'une quelconque des revendications précédentes, dans lequel les éléments de support de la pluralité d'éléments de support (70) sont agencés de manière sensiblement parallèle les uns par rapport aux autres.

7. Procédé selon l'une quelconque des revendications précédentes, dans lequel les bandes (88) sont agencées de manière juxtaposée avec un espace prédéfini entre des bandes adjacentes (88).

8. Procédé selon la revendication 7, dans lequel l'espace entre des bandes adjacentes (88) mesure entre 1 et 25 mm de large.

9. Procédé selon l'une quelconque des revendications précédentes, dans lequel chaque bande (88) a une largeur W mesurant entre 0,04 et 5 m et dans lequel chaque bande a une longueur L mesurant entre 15 et 50 m.

10. Procédé selon l'une quelconque des revendications précédentes, dans lequel les bandes (88) sont attachées aux éléments de support (70) par un ou plusieurs boulons sertis ou des soudages par point.

11. Procédé selon l'une quelconque des revendications précédentes, dans lequel l'élément plan (72) de l'élément de support (70) a une épaisseur mesurant moins de 3 cm.

12. Procédé selon l'une quelconque des revendications précédentes, dans lequel des bandes adjacentes (88) sont interconnectées le long de leurs bords longitudinaux.

13. Procédé selon l'une quelconque des revendications précédentes, dans lequel le procédé comporte par ailleurs l'étape consistant à chauffer le matériau fibreux et l'agent liant jusqu'à une température mesurant entre 40 et 200 °C pour former une pluralité de préformes.

14. Moule à préforme servant à la fabrication d'une préforme pour une pale d'éolienne, le moule à préforme comportant
- une pluralité d'éléments de support (70), chaque élément de support (70) comportant un élément plan (72) ayant une surface avant (74) et une surface arrière opposée (76), une surface supérieure (78) et une surface inférieure opposée (80), et deux surfaces latérales opposées (82, 84),
- une pluralité de bandes (88) agencées de manière juxtaposée et de bord à bord sur la surface supérieure (78) de l'élément plan (72) de chaque élément de support (70), dans lequel les bandes s'étendent dans une direction longitudinale du moule à préforme, de telle sorte que leur direction longitudinale est alignée sur la direction longitudinale du moule à préforme, dans lequel les bandes de la pluralité de bandes forment une surface de moulage concave, ou courbée vers l'intérieur, pour former la préforme.

15. Procédé de fabrication d'une partie de pale d'éolienne, le procédé comportant les étapes consistant à :
- fabriquer une ou plusieurs préformes (98) selon l'une quelconque des revendications 1 à 13,
- agencer les préformes (98) dans une cavité de moule de pale (97), éventuellement avec des matières supplémentaire (94),
- infuser de la résine dans la cavité de moule de pale (97),
- faire sécher ou durcir la résine afin de former la partie de pale.
